Europäisches Patentamt

European Patent Office

Office européen des brevets

(11) Veröffentlichungsnummer : **0 125 547**
**B1**

(12) **EUROPÄISCHE PATENTSCHRIFT**

(45) Veröffentlichungstag der Patentschrift :
08.07.87

(21) Anmeldenummer : 84104762.4

(22) Anmeldetag : 27.04.84

(51) Int. Cl.⁴ : **F 16 C 13/04,** F 16 C 15/00,
F 27 B 7/22, F 16 C 13/00

(54) Rotierender Zylinder mit Laufring.

(30) Priorität : 16.05.83 DE 3317772

(43) Veröffentlichungstag der Anmeldung :
21.11.84 Patentblatt 84/47

(45) Bekanntmachung des Hinweises auf die Patenterteilung : 08.07.87 Patentblatt 87/28

(84) Benannte Vertragsstaaten :
BE DE FR GB

(56) Entgegenhaltungen :
FR-A- 2 130 775
FR-A- 2 169 466
FR-A- 2 170 590

(73) Patentinhaber : Krupp Polysius AG
Graf-Galen-Strasse 17
D-4720 Beckum (DE)

(72) Erfinder : Alker, Karl-Heinz
Im Zuckerort 50
D-4730 Ahlen (DE)
Erfinder : Grothaus, Hubert
Kronesch 11
D-4505 Iburg (DE)
Erfinder : Lücke, Helmut
Zum Igelsbusch 2
D-4720 Beckum (DE)
Erfinder : Henne, Heinz
Freesland 22
D-4722 Ennigerloh (DE)

(74) Vertreter : Tetzner, Volkmar, Dr.-Ing. Dr. Jur.
Van-Gogh-Strasse 3
D-8000 München 71 (DE)

## Beschreibung

Die Erfindung betrifft einen rotierenden Zylinder mit einem über eine Flanschverbindung befestigten Laufring.

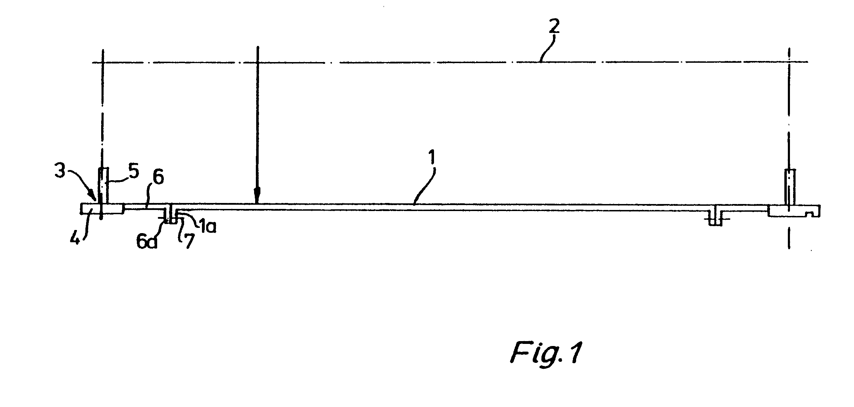

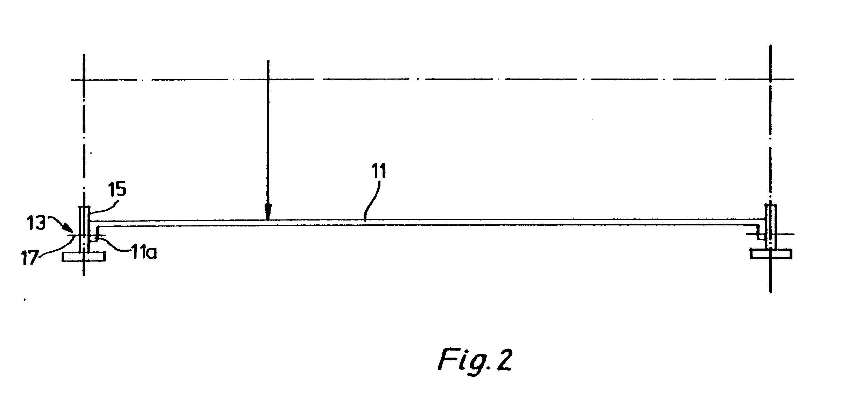

Bei bekannten Ausführungen (Fig. 1) ist zwischen dem Schuß 1 eines rotierenden Zylinders (Achse 2) und dem zur Lagerung dieses Zylinders dienenden Laufring 3 (bestehend aus Laufringbandage 4 und Steg 5) ein Zwischenschuß 6 vorgesehen. Dieser Zwischenschuß 6 ist mit dem Laufring 3 im allgemeinen verschweißt und trägt an seinem dem Zylinderschuß 1 zugewandten Ende einen Flansch 6a, der mit einem Flansch 1a des Schusses 1 über Schrauben 7 verbunden ist.

Der wesentliche Nachteil dieser bekannten Ausführung besteht darin, daß die Schwellbeanspruchung der Schrauben 7 durch die aus den Längsbiegemomenten herrührenden Betriebskräfte umso größer ist, je weiter sich der Flansch 6a von der Lagerstelle entfernt zur Mühlenmitte hin (beispielsweise einer langen Rohrmühle) befindet.

Bei einer weiteren, in Fig. 2 dargestellten bekannten Ausführung (FR-A-2 130 775 und FR-A-2 170 590) ist der Laufring 13 mit größerem Durchmesser als der Schuß 11 des Zylinders ausgeführt. Der Flansch 11a des Schusses 11 ist hier über Schrauben 17 mit dem Steg 15 des Laufringes 13 verbunden. Nachteilig ist bei dieser Ausführung, daß die gesamte Ausführung durch den größeren Durchmesser des Laufringes 13 ein größeres Gewicht erhält und höhere Kosten bedingt.

Der Erfindung liegt daher die Aufgabe zugrunde, unter Vermeidung der geschilderten Mängel eine Verbindung zwischen einem rotierenden Zylinder und einem Laufring zu schaffen, bei der die Betriebskräfte der Schrauben, insbesondere ihre Schwellbeanspruchung, wesentlich verringert sind, so daß eine kostengünstigere Herstellung ermöglicht wird.

Diese Aufgabe wird erfindungsgemäß dadurch gelöst, daß der mit dem Flansch des Zylinderschusses verbindbare laufringseitige Flansch unmittelbar am Laufring am axialen Ende der Laufringbandage vorgesehen ist.

Berechnungen zeigten, daß sich durch diese Lösung die Betriebskräfte führ die Schrauben um bis zu 85 % verringern. Weiterhin ergibt sich durch die erfindungsgemäße Flanschanordnung eine zusätzliche Versteifung des Laufringes, die sich günstig auf die Lagerung des rotierenden Zylinders auswirkt. Schließlich werden auch noch verschiedene fertigungstechnische Vorteile erzielt : So werden im Vergleich zu bekannten Ausführungen Schweißnähte eingespart und die Bearbeitung vereinfacht.

Gemäß einer zweckmäßigen Ausgestaltung der Erfindung ist der laufringseitige Flansch mit der Laufringbandage verschweißt. Im Rahmen der Erfindung ist es jedoch auch möglich, die Laufringbandage und den laufringseitigen Flansch einstückig als Gußteil auszubilden, z. B. als Stahlgußteil, Graugußteil oder Kugelgraphitgußteil.

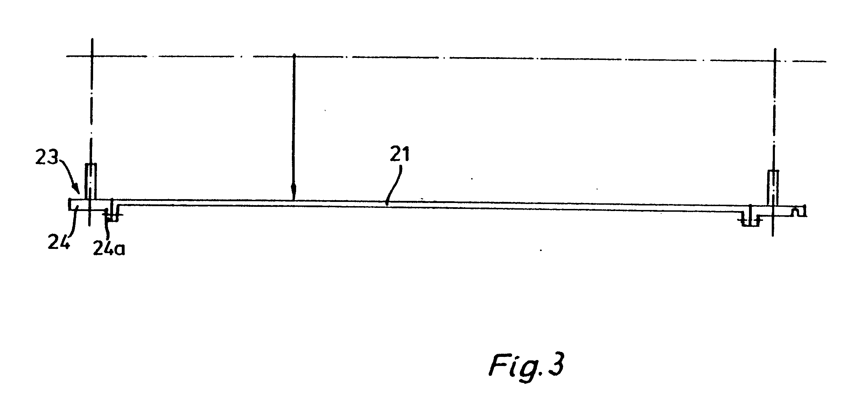

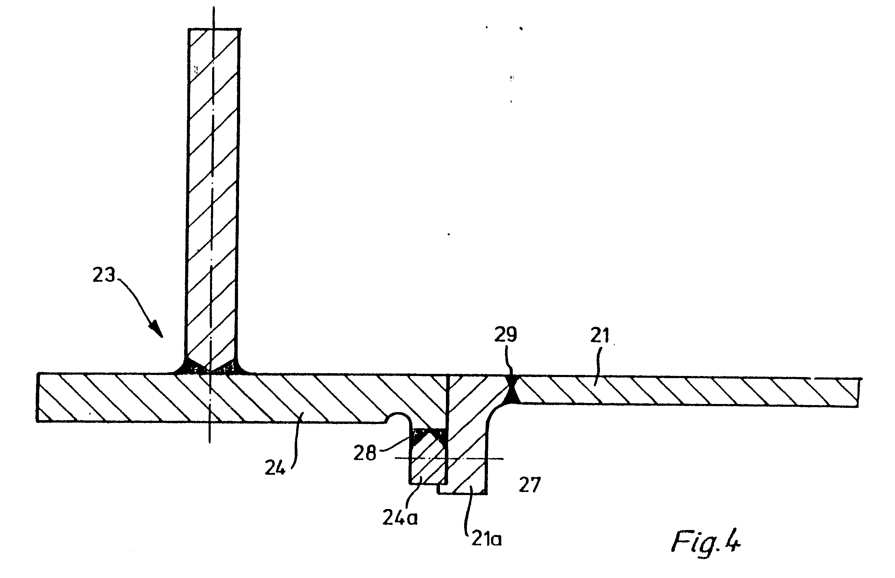

Die Fig. 3 und 4 zeigen ein Ausführungsbeispiel der erfindungsgemäßen Lösung.

Der Laufring 23 enthält eine Laufringbandage 24, die an ihrem dem Zylinderschuß 21 zugewandten Ende einen Flansch 24a trägt, der mit dem Flansch 21a des Schusses 21 über Schrauben 27 verbunden ist. Der Flansch 24a ist mit der Laufringbandage 24 verschweißt (Schweißnähte 28). Ebenso ist der Flansch 21a mit dem Zylinderschuß 21 verschweißt (Schweißnähte 29).

### Patentansprüche

1. Rotierender Zylinder mit einem über eine Flanschverbindung befestigten Laufring, dadurch gekennzeichnet, daß der mit dem Flansch (21a) des Zylinderschusses (21) verbindbare laufringseitige Flansch (24a) unmittelbar am Laufring (23) am axialen Ende der Laufringbandage (24) vorgesehen ist.

2. Rotierender Zylinder nach Anspruch 1, dadurch gekennzeichnet, daß der laufringseitige Flansch (24a) mit der Laufringbandage (24) verschweißt ist.

3. Rotierender Zylinder nach Anspruch 1, dadurch gekennzeichnet, daß die Laufringbandage und der laufringseitige Flansch einstückig als Gußteil ausgebildet sind.

### Claims

1. Rotating cylinder with a bearing ring fastened by means of a flange connection, characterized in that the flange (24a) which is located on the side of the bearing ring and can be connected to the flange (21a) of the cylinder shell (21) is provided directly on the bearing ring (23) at the axial end of the bearing ring collar (24).

2. Rotating cylinder as claimed in claim 1, characterized in that the flange (24a) located on the side of the bearing ring is welded to the bearing ring collar (24).

3. Rotating cylinder as claimed in claim 1, characterized in that the bearing ring collar and the flange located on the side of the bearing ring are constructed in one piece as a casting.

### Revendications

1. Cylindre rotatif équipé d'une bague de roulement fixée par brides, caractérisé en ce que : la bride (24a) située du côté de la bague de roulement et destinée à être réunie à la bride (21a) de l'élément (21) du cylindre est prévue directement sur la bague de roulement (23), à l'extrémité axiale de la frette (24) de cette bague.

2. Cylindre rotatif selon la revendication 1, caractérisé en ce que la bride (24a) située du côté de la bague de roulement est soudée à la frette (24) de cette dernière.

3. Cylindre rotatif selon la revendication 1, caractérisé en ce que la frette de la bague de roulement et la bride située du côté de cette dernière sont en une pièce venue de fonderie.

Fig.1

*Fig. 2*

0 125 547

*Fig.3*

23

29

21

24

28

24a

21a

27

Fig.4

0 125 547